# EUROPÄISCHE PATENTSCHRIFT

(11) **EP 0 932 789 B1**
(45) Veröffentlichungstag und Bekanntmachung des Hinweises auf die Patenterteilung: **30.08.2000**
(21) Anmeldenummer: 98936230.6
(22) Anmeldetag: 18.06.1998
(51) Int. Cl.: F16L 37/088

(54) **STECKVERBINDUNG FÜR ROHRLEITUNGEN**
PIPE CONNECTION
RACCORD PAR EMBOITEMENT POUR CONDUITES RIGIDES

(30) Priorität: 02.07.1997 DE 19728137; 24.02.1998 DE 29803195 U
(43) Veröffentlichungstag der Anmeldung: 04.08.1999
(73) Patentinhaber: Johannes Schäfer vormals Stettiner Schraubenwerke GmbH & Co. KG, 35410 Hungen (DE)
(72) Erfinder: FUNK, Hans, Georg, D-35410 Hungen (DE)
(74) Vertreter: Haar, Lucas Heinz Jörn, Dipl.-Ing.
(86) Internationale Anmeldenummer: DE9801687
(87) Internationale Veröffentlichungsnummer: WO9901691

(56) Entgegenhaltungen:
- EP-A- 0 615 089
- US-A- 4 471 978
- US-A- 5 419 594

## Beschreibung

Die Erfindung betrifft eine Steckverbindung für Rohrleitungen mit zwei Verbindungsteilen, nämlich einem Innenteil und einem Außenteil, die miteinander verbunden und voneinander getrennt werden können, wobei das Innenteil mit einem Steckzapfen in eine Öffnung des Außenteils einsteckbar und dort über ein in radialer Richtung verformbares Halteelement verriegelbar ist, das in einer Ausnehmung in der Öffnung des Außenteils angeordnet und beim Steckvorgang durch radiale elastische Verformung in diese Ausnehmung verdrängbar ist, wobei im Steckzapfen eine Ausnehmung vorgesehen ist, in die das Halteelement in der Verriegelungsstellung der Verbindungsteile durch elastisches Zurückverformen derart eingreift, daß der Steckzapfen gegen Herausziehen aus der Öffnung durch das Halteelement verriegelt ist und wobei die in Steckrichtung hintere Seitenwand der Ausnehmung im Steckzapfen von einer Stirnfläche eines auf dem Steckzapfen axial verschiebbar angeordneten Entriegelungselements gebildet wird. Die Erfindung betrifft weiterhin eine Kombination einer derartigen Steckverbindung mit einem Lösewerkzeug.

Bei einer aus der US 5 570 910 A bekannten Steckverbindung ist das Innenteil mit dem Steckzapfen einstückig ausgebildet und das Entriegelungselement besteht aus zwei Hülsen, einer inneren aus Metall hergestellten Hülse, die den Steckzapfen umgreift und einer äußeren, aus einem Kunststoff hergestellten Hülse, die das Außenteil umgreift und in der Entriegelungsstellung mit einem Arretierungswulst in eine Nut im Außenteil einrastet. Die innere, metallische Hülse ist mit einem durchgehenden Schlitz versehen, damit die Hülse aufgeweitet und auf den Steckzapfen montiert werden kann. Die äußere Hülse aus Kunststoff ist ungeschlitzt und mit einer Dichtrippe versehen, die nach innen gerichtet ist und zur Bildung einer Staubdichtung an dem Innenteil angreift. Die bekannte Steckverbindung hat den Nachteil, daß die Herstellung des Entriegelungselements aufwendig und teuer ist. Weiterhin läßt sich eine wirksame, auch flüssigkeitsdichte Abdichtung an dem Entriegelungselement wegen der geschlitzten Ausführung der Innenhülse nur schwer erreichen.

Der Erfindung liegt die Aufgabe zugrunde, eine Steckverbindung der eingangs genannten Art zu schaffen, die einfach und kostengünstig hergestellt werden kann und mit einfachen Mitteln eine flüssigkeitsdichte Abdichtung des Verbindungsbereichs der Steckverbindung ermöglicht.

Erfindungsgemäß wird diese Aufgabe dadurch gelöst, daß die in Steckrichtung vordere Seitenwand der Ausnehmung im Innenteil von einem ringförmigen Abstützelement gebildet wird, das in eine Umfangsausnehmung des Innenteils eingreift und in axialer Richtung in der Umfangsausnehmung abgestützt ist und daß der Durchmesser des in Steckrichtung vor der Ausnehmung befindlichen Teils des Innenteils gleich oder kleiner ist, als der kleinste Innendurchmesser des Entriegelungselements.

Bei der erfindungsgemäßen Steckverbindung kann das Entriegelungselement ein geschlossener, starrer ringförmiger Körper sein, der vor der Montage des Abstützelements auf den Steckzapfen aufsteckbar ist. Das Entriegelungselement ist daher einfach herstellbar und kann mit einfachen Mitteln, beispielsweise einem innenliegenden und einem außenliegenden Dichtring sehr wirksam z.B. flüssigkeits- oder gasdicht abgedichtet werden. Die erfindungsgemäße Steckverbindung eignet sich daher auch für explosionsgeschützte Anwendungen. Da die Montage des Entriegelungselements von der Einsteckseite des Steckzapfens her erfolgt, kann das andere mit einer starren oder flexiblen Rohrleitung verbindbare Ende des Innenteils beliebig gestaltet, beispielsweise abgewinkelt oder als T-Stück ausgebildet sein.

Das Abstützelement der Steckverbindung bietet weiterhin die vorteilhafte Möglichkeit, für die Herstellung des Innenteils und die Herstellung des Abstützelements unterschiedliche Werkstoffe zu wählen. Auf diese Weise kann den besonderen Anforderungen an die mit dem Halteelement zusammenwirkende Abstützstelle durch geeignete Werkstoffwahl Rechnung getragen werden, ohne daß dies zu einer Verteuerung des Innenteils führt. So kann beispielsweise für das Innenteil ein leicht zu bearbeitendes, weicheres Material gewählt werden, während das Abstützelement aus einem härteren, für hohe Flächenpressungen geeigneten Material hergestellt wird. Die Formgebung der Kraftübertragungsflächen zwischen dem Abstützelement und dem Innenteil läßt sich bei der erfindungsgemäßen Steckverbindung relativ frei gestalten und ist nicht an die durch den Verriegelungs- und Entriegelungsvorgang bestimmte Formgebung der mit dem Halteelement zusammenwirkenden Abstützflächen gebunden.

Besonders einfach ist eine Ausgestaltung der Steckverbindung herstellbar, bei der das ringförmige Abstützelement ebenso wie das Halteelement aus einem geschlitzten Ring aus Federmaterial, z.B. Federstahl oder Federbronze besteht, wobei sich ein Ring aus Runddraht mit kreisförmigem Querschnitt besonders eignet. Durch diese Querschnittsform des Abstützelements und des Halteelements ergeben sich günstige Bedingungen für das Aufweiten des Halteelements beim Zusammenstecken und Lösen der Steckverbindung. Ist die Steckverbindung für geringere Druckbeanspruchungen vorgesehen, so kann der geschlitzte Ring auch aus Kunststoff hergestellt sein. Der Runddraht, aus dem das Halteelement und das Abstützelement hergestellt sind, kann den gleichen Durchmesser haben. Die Durchmesser der Runddrahtquerschnitte von Halteelement und Abstützelement können aber auch unterschiedlich sein. Das Abstützelement kann nach einem weiteren Vorschlag der Erfindung auch aus einem geschlossenen Ring bestehen, der durch bleibende radiale Verformung, z.B. durch Einrollen eines Kragens in einer Nut formschlüssig mit dem Steckzapfen verbunden wird.

Um das aus einem Ring aus Runddraht bestehende Halteelement in der Verriegelungsstellung formschlüssig zu sichern, kann erfindungsgemäß die am Außenteil vorgesehene Anlagefläche für das Halteelement eine Kegelfläche sein, deren Neigungswinkel kleiner ist als der Winkel zwischen der an das Halteelement an der Berührungsstelle mit dem Abstützelement angelegten Tangente und der Mittelachse der Steckverbindung. Durch diese Maßnahme sind die bei einer Belastung des Steckzapfens in Zugrichtung auf das Halteelement einwirkenden Kräfte bestrebt, das Halteelement radial nach innen an den Steckzapfen und axial an die Anlagefläche am Außenteil anzudrücken. Eine Bewegung des Halteelements in die Entriegelungsstellung ist daher nur möglich, wenn der Abstand zwischen der Anlagefläche am Außenteil und dem Abstützelement des Steckzapfens durch Hineindrücken des Steckzapfens in die Aufnahmebohrung im Außenteil um ein bestimmtes Maß vergrößert wird. Dem wirkt die Belastung der Steckverbindung jedoch entgegen. Als vorteilhaft hat sich erwiesen, wenn der Neigungswinkel der Anlagefläche 40° oder kleiner und der Winkel zwischen der Tangente und der Mittelachse 45° oder größer ist. Erfindungsgemäß kann weiterhin vorgesehen sein, daß die Anlagefläche für das Halteelement am Steckzapfen einen geringfügig kleineren Durchmesser hat als die Innenfläche des Entriegelungselements, die beim Entriegeln die Anlagefläche überdeckt. Hierdurch wird sichergestellt, daß durch die Einwirkung des Halteelements unter Last hervorgerufene Verformungen der Anlagefläche nicht zu einer Beeinträchtigung der Verschiebbarkeit des Entriegelungselements führen.

Das Entriegelungselement besteht vorzugsweise aus einer zylindrischen oder konischen Hülse, die axial bewegbar auf dem Steckzapfen oder in der Aufnahmebohrung des Außenteils angeordnet sein kann und die eine radiale Schulter aufweist, die zur Einleitung der Kraft zum Verschieben der Hülse in die Entriegelungsstellung dient. Weiterhin kann das Entriegelungselement erfindungsgemäß eine kegelige Stirnfläche von solcher Kegelneigung haben, daß das Verdrängen des Halteelements in die Ausnehmung des Außenteils durch das Entriegelungselement unterstützt wird.

Bei Steckverbindungen zum Anschließen einer flexiblen Rohrleitung kann es notwendig sein, den Steckzapfen gegen Verdrehen gegenüber dem Außenteil zu sichern. Erfindungsgemäß kann der Steckzapfen in der Aufnahmebohrung des Außenteils durch einen in eine Ausnehmung eingreifenden Vorsprung an einer Drehung gegenüber dem Außenteil gehindert sein. Eine geeignete Verdrehsicherung kann auch durch das Entriegelungselement gebildet werden. Das Entriegelungselement kann hierzu radiale Vorsprünge und/oder Vertiefungen haben, die mit von der Zylinderform abweichenden radialen Vorsprüngen bzw. Vertiefungen in der Öffnung des Außenteils und auf der Mantelfläche des Innenteils zusammenwirken und derart ineinandergreifen, daß das Innenteil an einer Verdrehung gegenüber dem Außenteil gehindert ist. Besonders einfach ist eine Ausgestaltung, bei der das Entriegelungselement aus einer aus Blech geformten Hülse besteht, wobei das in die Öffnung im Außenteil eingreifende Ende der Hülse und der entsprechende Abschnitt der Öffnung mit einem ineinandergreifenden Kerbzahnprofil versehen sind und wobei das entgegengesetzte Ende der Hülse mit einer Vieleckbohrung versehen ist, die einen sechskantigen Abschnitt des Innenteils drehfest umgreift.

Nach einem weiteren Vorschlag der Erfindung kann die Steckverbindung in der Verriegelungsstellung in axialer Richtung durch ein Federelement vorgespannt sein, das einerseits an dem Außenteil und andererseits über das Entriegelungselement an dem Innenteil abgestützt ist und bestrebt ist, das Innenteil entgegen der Einsteckrichtung aus dem Außenteil herauszudrücken. Durch das Federelement wird die verriegelte Steckverbindung spielfrei gehalten und eine Verschiebung des Entriegelungselements in die Entriegelungsstellung erschwert. Zusätzlich kann ein Sicherungselement vorgesehen sein, das entfernt werden muß, um ein Verschieben des Entriegelungselements in die Entriegelungsstellung zu ermöglichen. Als Federelement kann ein Ring aus elastomerem Material verwendet werden, der auch eine Abdichtung zwischen dem Entriegelungselement und dem Außenteil bewirkt. Zur Abdichtung des Entriegelungselements gegenüber dem Innenteil kann in einer Nut des Steckzapfens ein Dichtring angeordnet sein.

Um ein einfaches Lösen der Steckverbindung zu ermöglichen, kann weiterhin vorgesehen sein, daß die Schulter der Entriegelungshülse und/oder ein Ringbund des Steckzapfens an der dem Ringbund bzw.- der Schulter zugekehrten Anlagefläche eine radial nach außen offene Ausnehmung für ein Lösewerkzeug hat. Dies hat den Vorteil, daß die Steckverbindung in ihren axialen und radialen Abmessungen sehr kompakt ausgestaltet sein kann. An der Entriegelungshülse ist keine große Angriffsfläche für die Einleitung einer Lösekraft erforderlich und auch in axialer Richtung wird kein zusätzlicher Bauraum benötigt, da die Ausnehmung für das Einsetzen des Lösewerkzeugs so gestaltet werden kann, daß sie die Baulänge in der Steckverbindung nicht beeinflußt. Die erfindungsgemäße Gestaltung hat weiterhin den Vorteil, daß aufgrund der sich durch die Lage der Ausnehmung ergebenden günstigen Hebelverhältnisse bzw. Kraftübertragungsverhältnisse bereits mit einem Lösewerkzeug geringer Größe eine vergleichsweise hohe Lösekraft erreicht werden kann. Die Steckverbindung kann daher mit einem zwischen der Schulter der Entriegelungshülse und dem Außenteil eingespannten, vergleichsweise starken Federelement ausgerüstet sein, ohne daß dadurch das Lösen der Steckverbindung beeinträchtigt wird. Schließlich ist von Vorteil, daß die Ausnehmung für das Einsetzen des Lösewerkzeugs, beispielsweise an dem Ringbund des Steckzapfens, keinen nennenswerten Fertigungsaufwand erfordert, da die Ausnehmung gleichzeitig mit anderen Bearbeitungsvorgängen hergestellt werden kann. Besonders vorteilhaft ist eine Ausgestaltung, bei der die Ausnehmung durch eine Kegelfläche gebildet ist.

Die Erfindung wird nachfolgend anhand von Ausführungsbeispielen näher erläutert, die in der Zeichnung dargestellt sind. Es zeigen
- Figur 1: das Außenteil und
- Figur 2: das Innenteil einer Steckverbindung gemäß der Erfindung jeweils im Längsschnitt,
- Figur 3: einen vergrößerten Ausschnitt der Steckverbindung gemäß den Figuren 1 und 2 in der Verriegelungsstellung,
- Figur 4: einen Längsschnitt einer Steckverbindung gemäß der Erfindung mit Verdrehsicherung,
- Figur 5: einen Querschnitt entlang der Linie V - V der Steckverbindung gemäß Figur 4,
- Figur 6: eine mit einem Lösewerkzeug zusammenwirkende Steckverbindung gemäß der Erfindung teilweise geschnitten,
- Figur 7: die Steckverbindung gemäß Figur 6 mit angesetztem Lösewerkzeug in der Entriegelungsstellung,
- Figur 8: die Steckverbindung mit angesetztem Lösewerkzeug gemäß Figur 7 in Ansicht,
- Figur 9: einen Längsschnitt einer weiteren Ausführungsform einer Steckverbindung mit Verdrehsicherung und
- Figur 10: einen Querschnitt durch die Steckverbindung gemäß Figur 9.

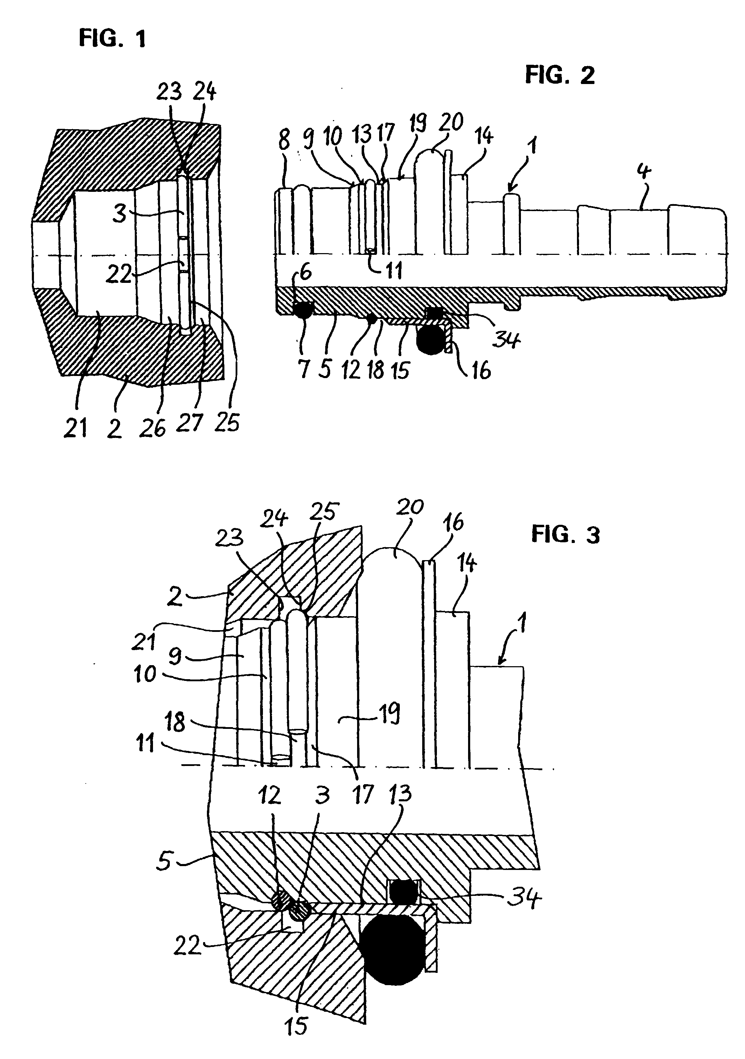

Die in den Figuren 1 bis 3 dargestellte Steckverbindung besteht aus einem Innenteil 1 und einem Außenteil 2, die durch ein Halteelement 3 miteinander verbindbar sind. Das Innenteil 1 hat die Form eines Rohrs und weist an einem Ende eine Tülle 4 zur Befestigung einer Druckleitung auf. Das andere Ende des Innenteils 1 ist als Steckzapfen 5 ausgebildet, der in einer Ringnut 6 einen Dichtring 7 trägt. Die Ringnut 6 befindet sich in einem zylindrischen Endabschnitt 8 der Außenfläche des Steckzapfens 5. An den Endabschnitt 8 schließt sich eine Kegelfläche 9 an, deren Durchmesser in Richtung der Tülle 4 zunimmt und die in eine kurze Zylinderfläche 10 größeren Durchmessers übergeht. Die Zylinderfläche 10 wird auf der der Kegelfläche 9 abgekehrten Seite durch eine sich radial nach innen erstreckende Nut 11 begrenzt, in der sich ein Abstützelement 12 befindet. Das Abstützelement 12 ist als geschlitzter, elastisch verformbarer Runddraht-Sprengring, z.B aus rostfreiem Federstahl, Federbronze, oder Kunststoff, ausgebildet und greift mit der radial inneren Hälfte seines Querschnitts in die an die Querschnittsform des Runddraht-Sprengrings angepasste Nut 11 ein. Zur Montage wird das Abstützelement 12 auf den Endabschnitt 8 des Steckzapfens 5 aufgesteckt und über die Kegelfläche 9, wobei es aufgeweitet wird, und die Zylinderfläche 10 bis zum Einrasten in die Nut 11 geschoben, wo es mit geringer radialer Vorspannung an der Wand der Nut 11 anliegt.

An die Nut 11 schließt sich eine Zylinderfläche 13 an, deren Durchmesser dem Durchmesser der Zylinderfläche 10 entspricht. Die Zylinderfläche 13 wird zur Tülle 4 hin durch einen Ringbund 14 größeren Durchmessers begrenzt. Auf der Zylinderfläche 13 ist axial verschiebbar ein hülsenförmiges Entriegelungselement 15 mit einer radialen Schulter 16 angeordnet. Das Entriegelungselement 15 weist auf seiner dem Abstützelement 12 zugekehrten Seite eine kegelige Stirnfläche 17 auf, die sich in Richtung auf das Abstützelement 12 verjüngt und eine Kegelneigung von etwa 45° zur Längsachse des Steckzapfens 5 hat. Zwischen dem Abstützelement 12 und dem Entriegelungselement 15 ist ein Zwischenraum vorgesehen, der eine Ausnehmung 18 bildet. Die Mantelfläche 19 des Entriegelungselements 15 ist zylindrisch und ihr Außendurchmesser ist um wenige Zehntel Millimeter größer als der Außendurchmesser des Abstützelements 12. Auf dem Entriegelungselement 15 ist ein ringförmiges Federelement 20 aus elastomerem Material angeordnet, das sich an der Schulter 16 abstützen kann. In eine Ringnut in der Zylinderfläche 13 ist ein Dichtring 34 angeordnet, der den Gleitspalt zwischen der Zylinderfläche 13 und der Bohrung des Entriegelungselements 15 nach außen abdichtet.

Zur Aufnahme des Steckzapfens 5 weist das Außenteil 2 eine durchgehende Aufnahmebohrung 21 auf, deren Innendurchmesser an die Außendurchmesser der Teile des Steckzapfens 5 angepaßt sind. In der Aufnahmebohrung 21 befindet sich eine ringförmige Ausnehmung 22, in der das Halteelement 3 angeordnet ist. Die radiale Tiefe der Ausnehmung 22 ist so bemessen, daß das Halteelement 3 vollständig in die Ausnehmung 22 verdrängt werden kann. Die in Einsteckrichtung hintere Seitenwand 23 der Ausnehmung 22 erstreckt sich senkrecht zur Längsachse der Aufnahmebohrung 21. Die in Steckrichtung vordere Seitenwand 24 der Ausnehmung 22 weist eine als 30°-Fase ausgebildete Anlagefläche 25 für das Halteelement 3 in der Verriegelungsstellung auf. Die zylindrischen Bohrungsflächen 26, 27 beiderseits der Ausnehmung 22 haben einen den unterschiedlichen Außendurchmessern des Abstützelements 12 und der Mantelfläche 19 entsprechenden unterschiedlichen Durchmesser. Das Halteelement 3 ist wie das Abstützelement 12 als geschlitzter Runddraht-Sprengring ausgebildet. Im entspannten Zustand hat das Halteelement 3 einen Innendurchmesser, der mit dem Durchmesser der Zylinderfläche 13 des Steckzapfens 5 im wesentlichen übereinstimmt.

Zum Verbinden von Innenteil 1 und Außenteil 2 wird der Steckzapfen 5 in die Aufnahmebohrung 21 gesteckt und unter elastischer Verformung des Federelements 20 soweit nach innen gedrückt, bis das durch die Kegelfläche 9 und das Abstützelement 12 aufgeweitete und in die Ausnehmung 22 verdrängte Halteelement 3 in die Ausnehmung 18 einrastet. Die auf diese Weise erreichte Verriegelungsstellung ist in Figur 3 gezeigt. In dieser Stellung ist das Halteelement 3 durch die Wirkung des vorgespannten Federelements 20 zwischen dem Abstützelement 12 des Steckzapfens 5 und der Anlagefläche 25 des Außenteils 2 derart eingespannt, daß es gegen die Zylinderfläche 13 des Steckzapfens 5 gedrückt wird und nicht radial nach außen in den freien Bereich der Ausnehmung 22 ausweichen kann. Ein selbsttätiges Lösen der Steckverbindung ist daher in der gezeigten Stellung des Entriegelungselements 15 allenfalls durch Zerstören eines Bauteils möglich.

Das Lösen der Steckverbindung kann erreicht werden, indem der Steckzapfen 5 und mit diesem das Entriegelungselement 15 unter Verformung des Federelements 20 in die Aufnahmebohrung 21 hineingedrückt werden. Hierbei wird das Halteelement 3 von der Vorspannkraft des Federelements 20 entlastet und durch das Entriegelungselement 15 gemeinsam mit dem Steckzapfen 5 und dem Abstützelement 12 in der Ausnehmung 22 soweit verschoben, bis es an der Seitenwand 23 zur Anlage kommt. Anschließend wird durch das weitere Hineindrücken des Entriegelungselements 15 gemeinsam mit dem Steckzapfen 5 in die Aufnahmebohrung 21 das Halteelement 3 durch die kegelige Stirnfläche 17 des Entriegelungselements 15 aufgeweitet und radial nach außen in die Ausnehmung 22 verdrängt. Ist diese Entriegelungsstellung erreicht, so kann der Steckzapfen 5 gemeinsam mit dem Entriegelungselement 15 und dem Abstützelement 12 aus dem Außenteil 2 herausgezogen werden. Das Halteelement 3 verbleibt hierbei, wie in Figur 1 gezeigt, in der Ausnehmung 22 des Aufnahmeteils 2 zurück.

Anstelle eines Rings aus elastomerem Werkstoff kann als Federelement 20 auch eine Tellerfeder vorgesehen sein. Der zum Entriegeln der Steckverbindung erforderliche Entriegelungshub des Entriegelungselements kann weiterhin auch dadurch erreicht werden, daß zwischen dem Federelement 20 und der Schulter 16 eine entfernbare Distanzscheibe angeordnet ist. Weiterhin kann anstelle des Federelements 20 an anderer Stelle, beispielsweise in der Aufnahmebohrung 21, ein Federelement angeordnet sein, das in der Verriegelungsstellung Innenteil und Außenteil axial verspannt. Weiterhin kann das Entriegelungselement 15, durch ein Gewinde mit dem Steckzapfen 5 verschraubt sein. Der Entriegelungshub wird dann durch Drehen des Entriegelungselements bewirkt.

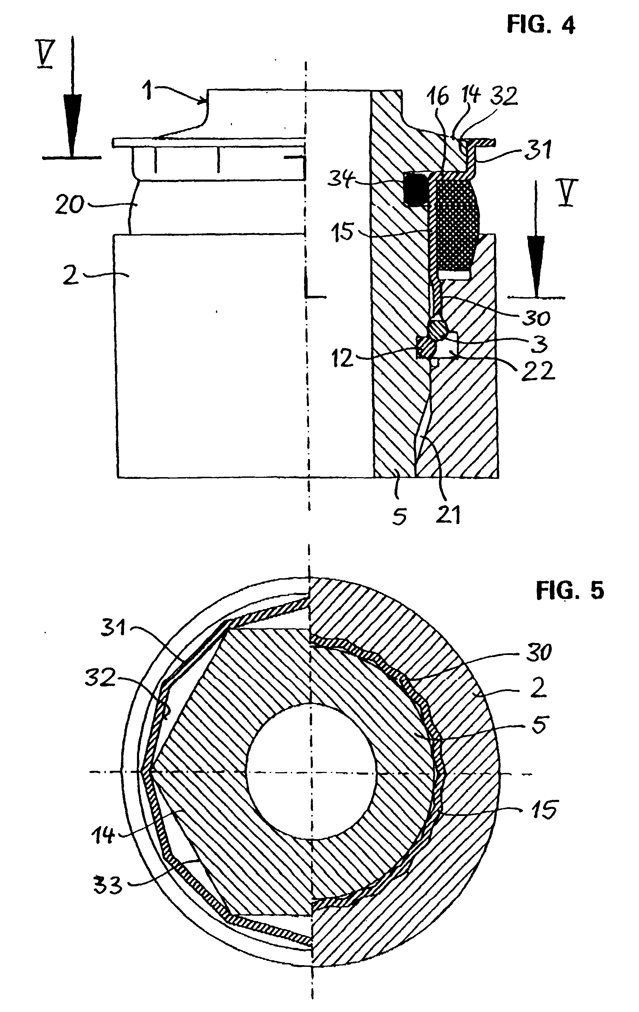

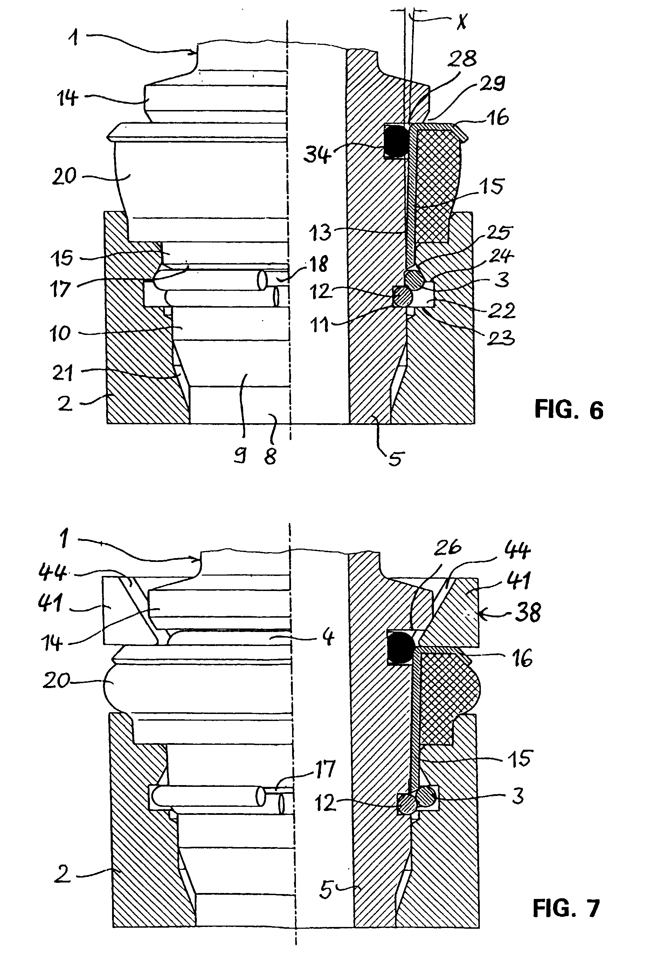

Bei dem in den Figuren 4 und 5 gezeigten Ausführungsbeispiel ist das aus einem Blech geformte Entriegelungselement 15 als Verdrehsicherung ausgebildet, durch die der in das Außenteil 2 eingesteckte Steckzapfen 5 an einer Verdrehung gegenüber dem Außenteil 2 gehindert ist. Das dem Halteelement 3 zugekehrte Ende des Entriegelungselements 15 ist auf seiner Außenseite mit einer stumpfwinkeligen Kerbverzahnung 30 versehen, die durch radiale Verformung des Bleches gebildet ist. Die Kerbverzahnung 30 besteht aus einer Vielzahl achsparalleler Zähne. Die Bohrungsfläche 27 der Aufnahmebohrung 21 im Außenteil 2 weist eine zur Kerbverzahnung 30 passende Innenverzahnung auf mit einer Vielzahl von Kerben, in die Zähne der Kerbverzahnung 30 eingreifen. Auf diese Weise ist das Entriegelungselement 15 nach dem Einstecken in das Außenteil 2 axial verschiebbar jedoch drehfest mit dem Außenteil 2 verbunden. Die an dem Bund 14 des Innenteils 1 anliegende Schulter 16 des Entriegelungselements 15 ist mit einem den Bund 14 übergreifenden Kragen 31 versehen, der die Form eines zwölfkantigen Prismas mit entsprechend geformter Innenfläche 32 hat. Der Bund 14 des Innenteils 1 ist als sechskantiges Prisma 33 ausgebildet, wobei der Kantendurchmesser des Prismas 33 dem der Innenfläche 32 des Kragens 31 entspricht. Die Kanten des Prismas 33 greifen somit jeweils in jede zweite Ecke der zwölfkantigen Innenfläche des Kragens 31 ein, wodurch eine drehfeste Verbindung zwischen dem Kragen 31 und dem Bund 14 gebildet wird. Die beschriebene Ausgestaltung der Verdrehsicherung hat den Vorteil, daß sie einfach herstellbar ist und das Zusammenstecken der Steckverbindung in einer Vielzahl von Winkelpositionen ermöglicht. Zusätzliche Bauteile sind zur Bildung der Verdrehsicherung nicht erforderlich.

Das in den Figuren 6 bis 8 dargestellte Ausführungsbeispiel ist für das Lösen mit Hilfe eines Lösewerkzeugs bestimmt. Mit Ausnahme der nachfolgend näher beschriebenen Merkmale stimmt dieses Ausführungsbeispiel in seinem grundsätzlichen Aufbau mit den vorstehend beschriebenen Ausführungsbeispielen überein.

Wie in Figur 6 gezeigt, ist bei diesem Ausführungsbeispiel die Anlagefläche 13 des Steckzapfens 5 leicht konisch ausgebildet, wobei ihr Durchmesser den Durchmesser der Zylinderfläche 10 geringfügig übersteigt und entgegen der Einsteckrichtung mit einer Neigung X zunimmt. Die auf der Anlagefläche 13 gelagerte Entriegelungshülse 15 hat ebenfalls eine konische Form gleicher Neigung, so daß sich das Spiel zwischen der Hülsenbohrung und der Anlagefläche 13 vergrößert, wenn die Entriegelungshülse 15 in die Entriegelungsstellung gebracht wird. Hierdurch läßt sich die Entriegelungshülse auch bei Auftreten von Korrosion leicht lösen und verschieben. Die Schulter 16 der Entriegelungshülse 15 stützt sich bei geschlossener Steckverbindung an einer Anlagefläche 28 des Ringbunds 14 ab. Am äußeren Rand der Anlagefläche 28 ist durch eine 30°-Fase eine Ausnehmung 29 gebildet, in die ein Lösewerkzeug 38, wie in Figur 7 gezeigt, einsetzbar ist.

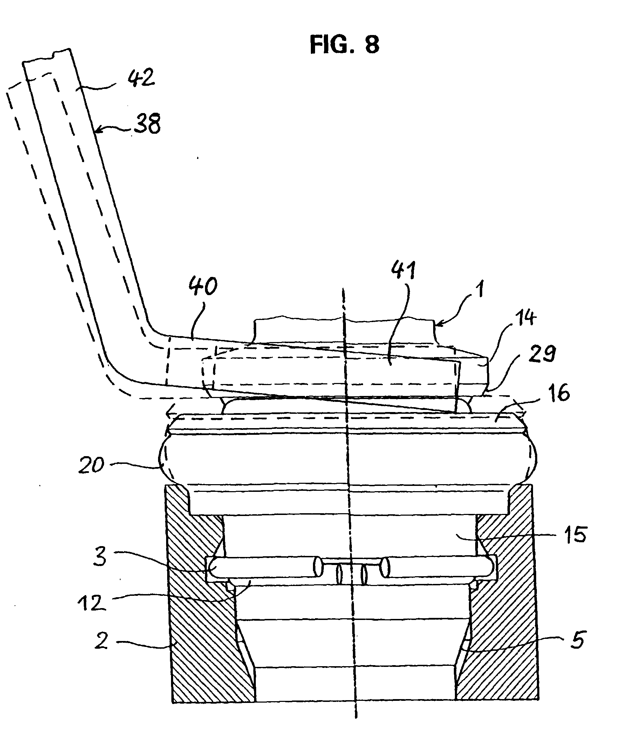

Zum Lösen der Steckverbindung wird das Lösewerkzeug 38 mit der Gabel 40 auf den Ringbund 14 des Steckzapfens 5 aufgesteckt, wobei die Zinken 41 den Ringbund 14 umgreifen und sich mit den Anlageflächen 44 in der Ausnehmung 29 an den Ringbund 14 und mit der durch die Plattenunterseite 45 gebildeten Anlagefläche an die Schulter 16 der Entriegelungshülse 15 anlegen. Wird nun der Griff 42 von Hand in Richtung auf das Innenteil 1 gedrückt, so dreht sich die Gabel 40 um eine durch die beiden Berührungsstellen zwischen den Anlageflächen 44 und dem Ringbund 14 definierte Achse, wodurch die an dem Ringbund 14 abgestützten Zinken 41 gegen die Schulter 16 der Entriegelungshülse 15 drücken und diese in die Lösestellung verschieben. Sobald die Lösestellung erreicht ist und das Halteelement 3 aus seiner Verriegelungsposition in die Ausnehmung 22 im Außenteil 2 verdrängt ist, kann die beim Lösevorgang an dem Steckzapfen 5 abgestützte Reaktionskraft von diesem nicht mehr über das Halteelement 3 auf das Außenteil 2 übertragen werden, so daß der Steckzapfen 5 von dem Federelement 20 in der Aufnahmebohrung 21 des Außenteils 2 in Löserichtung verschoben wird, und anschließend leicht aus der Aufnahmebohrung 21 herausgezogen werden kann. In Figur 8 ist dieser Vorgang veranschaulicht, wobei der Beginn des Lösevorgangs gestrichelt und das Erreichen der Lösestellung in ausgezogenen Linien dargestellt ist. Figur 7 zeigt das Erreichen der Lösestellung durch radiales Bewegen des Lösewerkzeugs 38. Hierbei wird durch die Keilwirkung der zweifach geneigten Anlageflächen 44 an den Zinken 41 das Lösewerkzeug 38 und durch dieses die Entriegelungshülse 15 in Löserichtung axial verschoben, ohne daß eine Drehung des Lösewerkzeugs 38, wie in Figur 8 gezeigt, erfolgt.

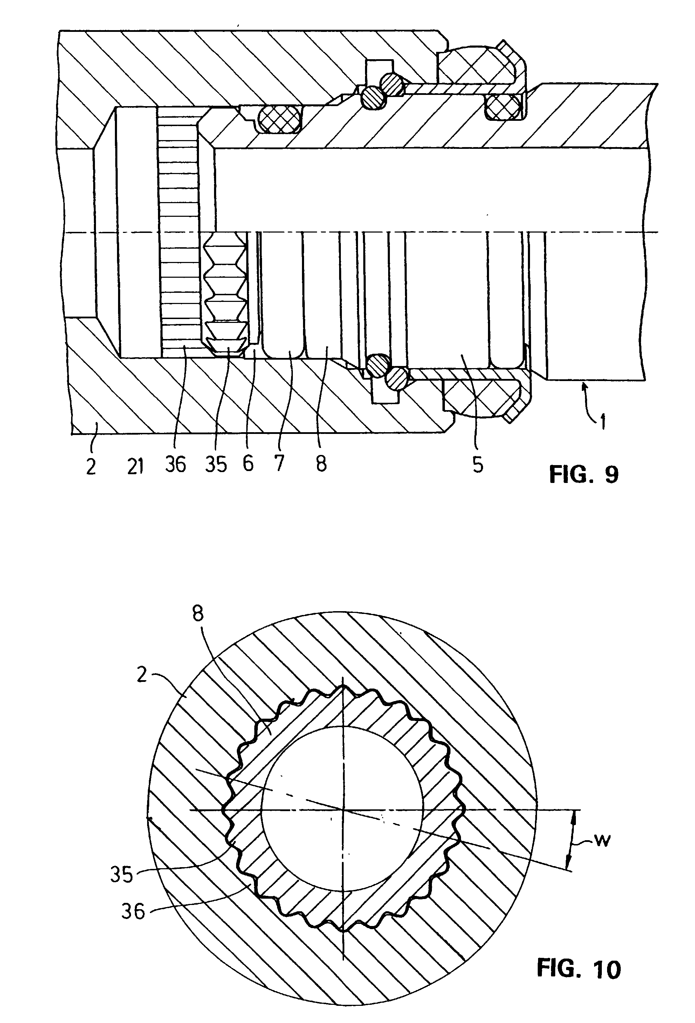

Bei dem in den Figuren 9 und 10 dargestellten Ausführungsbeispiel der Steckverbindung ist der Endabschnitt 8 des Steckzapfens 5 in Einsteckrichtung vor der Ringnut 6 mit einer Außenkerbverzahnung 35 versehen, die in der dargestellten Verriegelungsstellung in eine in der Aufnahmebohrung 21 des Außenteils 2 ausgebildete Innenkerbverzahnung 36 entsprechender Konfiguration eingreift. Die achsparallelen Zähne der beiden Kerbverzahnungen 35, 36 bilden eine Verdrehsicherung zwischen dem Innenteil 1 und dem Außenteil 2, wobei die Vielzahl der Zähne bei geringen radialen Abmessungen für die Übertragung eines ausreichen hohen Drehmoments sorgt und aufgrund des geringen Winkelabstands w der Zähne eine große Zahl von Steckpositionen ermöglicht. Durch ihre Anordnung innerhalb des durch den Dichtring 7 abgedichteten Bereich der Steckverbindung ist die Verdrehsicherung außerdem wirksam gegen Verschmutzung und Korrosion geschützt.

Neben den beschriebenen Beispielen sind zahlreiche weitere Ausführungsformen der erfindungsgemäßen Steckverbindung möglich. Alle bekannten Formen von Rohrverbindungen, ob gerade, gewinkelt, in T-Form oder dergleichen lassen sich mit der beschriebenen Steckverbindung realisieren. Ebenso kann das Innenteil als Einschraubstück oder integriertes Gehäuseteil ausgeführt sein und das Außenteil den lösbaren Stecker bilden. Innenteil und Außenteil können auch aus mehreren Teilen zusammengesetzt sein, die durch Schrauben, Bördeln, Kleben, Schweißen oder dergleichen miteinander verbunden sind. Durch eine solche Gestaltungsmaßnahme kann die erfindungsgemäße Steckverbindung auch an eine bereits in Geräten vorhandene Formbohrung angepaßt werden. Beispielsweise kann eine die Aufnahmebohrung für den Steckzapfen bildende Überwurfschraube in eine bereits vorhandene Anschlußbohrung mit Innengewinde eingeschraubt werden, die dann gemeinsam mit der Überwurfschraube das Außenteil der Steckverbindung bildet.

## Patentansprüche

1. Steckverbindung für Rohrleitungen mit zwei Verbindungsteilen, nämlich einem Innenteil (1) und einem Außenteil (2), die miteinander verbunden und voneinander getrennt werden können, wobei das Innenteil (1) mit einem Steckzapfen (5) in eine Öffnung (21) des Außenteils (2) einsteckbar und dort über ein in radialer Richtung verformbares Halteelement (3) verriegelbar ist, das in einer Ausnehmung (22) in der Öffnung des Außenteils (2) angeordnet und beim Steckvorgang durch radiale elastische Verformung in diese Ausnehmung (22) verdrängbar ist, wobei im Steckzapfen (5) eine Ausnehmung (18) vorgesehen ist, in die das Halteelement (3) in der Verriegelungsstellung der Verbindungsteile durch elastisches Zurückverformen derart eingreift, daß der Steckzapfen (5) gegen Herausziehen aus der Öffnung (21) durch das Halteelement (3) verriegelt ist und wobei die in Steckrichtung hintere Seitenwand der Ausnehmung (18) im Steckzapfen (5) von einer Stirnfläche (17) eines auf dem Steckzapfen (5) axial verschiebbar angeordneten Entriegelungselements (15) gebildet wird, **dadurch gekennzeichnet,** daß die in Steckrichtung vordere Seitenwand der Ausnehmung (18) am Steckzapfen (5) von einem ringförmigen Abstützelement (12) gebildet wird, das in eine Umfangsausnehmung (11) des Steckzapfens (5) eingreift und in axialer Richtung in der Umfangsausnehmung (11) abgestützt ist und daß der Durchmesser des in Steckrichtung vor der Umfangsausnehmung (11) befindlichen Teils (8) des Steckzapfens (5) gleich oder kleiner ist, als der kleinste Innendurchmesser des Entriegelungselements (15).

2. Steckverbindung nach Anspruch 1, dadurch gekennzeichnet, daß das Abstützelement (12) und/oder das Halteelement (3) ein geschlitzter Ring aus einem Federmaterial, z.B. Federstahl, Federbronze oder Kunststoff ist.

3. Steckverbindung nach Anspruch 2, dadurch gekennzeichnet, daß der geschlitzte Ring einen kreisförmigen Querschnitt hat.

4. Steckverbindung nach einem der vorhergehenden Ansprüche, dadurch gekennzeichnet, daß die am Außenteil (2) vorgesehene Anlagefläche (25) für das Halteelement (3) eine Kegelfläche ist, wobei der Neigungswinkel der Kegelfläche kleiner ist als der Winkel zwischen der an das Halteelement (3) an der Berührungsstelle mit dem Abstützelement (12) angelegten Tangente und der Mittelachse der Steckverbindung.

5. Steckverbindung nach einem der vorhergehenden Ansprüche, dadurch gekennzeichnet, daß die Anlagefläche (13) am Steckzapfen (5) für das Halteelement (3) einen geringfügig kleineren Durchmesser hat als die Innenfläche des Entriegelungselements (15), die beim Entriegeln die Anlagefläche (13) überdeckt.

6. Steckverbindung nach einem der vorhergehenden Ansprüche, dadurch gekennzeichnet, daß an dem Innenteil (1) einerseits und dem Außenteil (2) andererseits ein in der Verriegelungsstellung in axialer Richtung vorgespanntes Federelement (20) abgestützt ist.

7. Steckverbindung nach einem der vorhergehenden Ansprüche, dadurch gekennzeichnet, daß das Entriegelungselement (15) aus einer zylindrischen Hülse besteht, die axial bewegbar auf dem Steckzapfen (5) angeordnet ist und die eine radiale Schulter (16) aufweist, die zur Einleitung der Kraft zum Verschieben der Hülse in die Entriegelungsstellung dient.

8. Steckverbindung nach Anspruch 7, dadurch gekennzeichnet, daß das Federelement (20) an der Schulter (16) des Entriegelungselements (15) abgestützt ist.

9. Steckverbindung nach einem der vorhergehenden Ansprüche, dadurch gekennzeichnet, daß der Steckzapfen (5) in der Aufnahmebohrung (21) des Außenteils (2) durch einen in eine Ausnehmung eingreifenden Vorsprung an einer Drehung gegenüber dem Außenteil (2) gehindert ist.

10. Steckverbindung nach Anspruch 9, dadurch gekennzeichnet, daß der in Steckrichtung vordere Endabschnitt (8) des Steckzapfens (5) vor einem Dichtring (7) eine Außenkerbverzahnung (35) aufweist, die in eine in der Aufnahmebohrung (21) des Außenteils (2) ausgebildete Innenkerbverzahnung (36) eingreift.

11. Steckverbindung nach Anspruch 9, dadurch gekennzeichnet, daß das Entriegelungselement (15) radiale Vorsprünge und/oder Vertiefungen hat, die mit von der Zylinderform abweichenden radialen Vorsprüngen bzw. Vertiefungen in der Öffnung (21) des Außenteils (2) und auf der Mantelfläche des Innenteils (1) zusammenwirken und derart ineinandergreifen, daß das Innenteil (1) an einer Drehung gegenüber dem Außenteil (2) gehindert ist.

12. Steckverbindung nach Anspruch 11, dadurch gekennzeichnet, daß das Entriegelungselement (15) aus einer aus Blech geformten Hülse besteht, wobei das in die Öffnung (21) im Außenteil (2) eingreifende Ende der Hülse und der entsprechende Abschnitt der Öffnung (21) mit einem ineinandergreifenden Kerbzahnprofil versehen sind und daß das entgegengesetzte Ende der Hülse mit einer vielkantigen Innenfläche (32) versehen ist, die einen vielkantigen Abschnitt (33) des Innenteils (1) drehfest umgreift.

13. Steckverbindung nach einem der vorhergehenden Ansprüche, dadurch gekennzeichnet, daß das Entriegelungselement (15) in der Verriegelungsstellung gegenüber dem Innenteil (1) und dem Außenteil (2) abgedichtet ist.

14. Steckverbindung nach einem der vorhergehenden Ansprüche, dadurch gekennzeichnet, daß ein entfernbares Sicherungselement vorgesehen ist, das ein Verschieben des Entriegelungselements (15) in die Entriegelungsstellung verhindert.

15. Steckverbindung nach einem der vorhergehenden Ansprüche, dadurch gekennzeichnet, daß das Entriegelungselement durch ein Gewinde mit dem Steckzapfen verbunden ist.

16. Steckverbindung nach einem der vorhergehenden Ansprüche, dadurch gekennzeichnet, daß die Schulter (16) des Entriegelungselements (15) und/oder der Ringbund (14) des Steckzapfens (5) in der dem Ringbund (14) bzw. der Schulter (16) zugekehrten Anlagefläche (28) eine radial nach außen offene Ausnehmung (29) für ein Lösewerkzeug (38) hat.

17. Steckverbindung nach Anspruch 16, dadurch gekennzeichnet, daß die Ausnehmung (29) am Ringbund (14) oder an der Schulter (16) durch eine Kegelfläche gebildet ist.

## Claims

1. A coupling assembly for pipelines having two connecting members, namely a male member (1) and a female member (2) which are connectable to and separable from each other, the male member (1) having a spigot (5) to be received in an opening (21) in the female member (2) for locking engagement therein by means of a radially deformable retaining element (3) which is arranged in a recess (22) in the opening of the female member (2) and is adapted to be urged into said recess (22) by radial elastic deformation during the coupling operation, said spigot (5) being provided with a recess (18) into which the retaining element (3), due to elastic recovery, engages in the locked position of the connecting members so that the spigot (5) is locked by the retaining element (3) against being pulled out of the opening (21), and the rear side wall of the recess (18) in the spigot (5), as seen looking in the coupling direction, being formed by an end surface (17) of an unlocking element (15) mounted on the spigot (5) in an axially slidable arrangement, **characterized in that** the front side wall of the recess (18) in the spigot (5), as seen looking in the coupling direction, is formed by an annular support element (12) which engages in a circumferential groove (11) in the spigot (5) and is supported in axial direction inside the circumferential groove (11), and that the diameter of that section (8) of the spigot (5) in front of the circumferential groove (11), as seen looking in the coupling direction, is the same size as, or smaller than, the smallest inner diameter of the unlocking element (15).

2. The coupling assembly as claimed in claim 1, **characterized in that** the support element (12) and/or the retaining element (3) is a split ring made of a spring material as, for example, spring steel, spring bronze or plastic.

3. The coupling assembly as claimed in claim 2, **characterized in that** the split ring has a circular cross section.

4. The coupling assembly as claimed in any one of the preceding claims, **characterized in that** the abutment surface (25) provided on the female member (2) for engagement of the retaining element (3) is a conical surface whose angle of taper is smaller than the angle between the tangent applied to the retaining element (3) at the point of contact with the support element (12) and the center axis of the coupling assembly.

5. The coupling assembly as claimed in any one of the preceding claims, **characterized in that** the seating surface (13) on the spigot (5) for engagement with the retaining element (3) has a slightly smaller diameter than the inner surface of the unlocking element (15) which covers the seating surface (13) when unlocking.

6. The coupling assembly as claimed in any one of the preceding claims, **characterized in that** a spring element (20) biased axially in the locked position bears with one end against the male member (1) and with its other end against the female member (2).

7. The coupling assembly as claimed in any one of the preceding claims, **characterized in that** the unlocking element (15) is comprised of a cylindrical sleeve which is axially movably arranged on the spigot (5) and has a radial shoulder (16) serving to introduce the force for moving the sleeve into the unlocked position.

8. The coupling assembly as claimed in claim 7, **characterized in that** the spring element (20) takes support upon the shoulder (16) of the unlocking element (15).

9. The coupling assembly as claimed in any one of the preceding claims, **characterized in that** the spigot (5) is prevented from rotating relative to the female member (2) in the receiving bore (21) of the female member (2) by means of a projection engaging in a recess.

10. The coupling assembly as claimed in claim 9, **characterized in that** the front end section (8) of the spigot (5) in front of a sealing ring (7), as seen looking in the coupling direction, has an external serration (35) which is in meshing engagement with an internal serration (36) formed in the receiving bore (21) of the female member (2).

11. The coupling assembly as claimed in claim 9, **characterized in that** the unlocking element (15) has radial projections and/or recesses that cooperate with radial projections or recesses of a form deviating from the cylindrical form in the opening (21) of the female member (2) and on the envelope surface of the male member (1) and are in interfitting engagement so that the male member (1) is prevented from rotating relative to the female member (2).

12. The coupling assembly as claimed in claim 11, **characterized in that** the unlocking element (15) is comprised of a sleeve formed from sheet metal, wherein the end of the sleeve engaging in the opening (21) of the female member (2) and the corresponding section of the opening (21) are equipped with an interfitting serrated profile, and the opposite end of the sleeve has a polygonal inner surface (32) embracing a polygonal section (33) of the male member (1) in a manner preventing relative rotation.

13. The coupling assembly as claimed in any one of the preceding claims, **characterized in that** the unlocking element (15) is sealed vis-à-vis the male member (1) and the female member (2) in the locked position.

14. The coupling assembly as claimed in any one of the preceding claims, **characterized in that** a removable securing element is provided which prevents the unlocking element (15) from being moved into the unlocked position.

15. The coupling assembly as claimed in any one of the preceding claims, **characterized in that** the unlocking element is connected with the spigot by means of a thread.

16. The coupling assembly as claimed in any one of the preceding claims, **characterized in that** the shoulder (16) of the unlocking element (15) and/or the annular collar (14) of the spigot (5) has a recess (29) open in radially outward direction in the abutment surface (28) on the side close to the annular collar (14) or the shoulder (16) for application of a release tool (38).

17. The coupling assembly as claimed in claim 16, **characterized in that** the recess (29) on the annular collar (14) or on the shoulder (16) is formed by a conical surface.

## Revendications

1. Raccord par emboîtement pour conduites rigides ayant deux parties de raccord, à savoir une partie interne (1) et une partie externe (2), qui peuvent être raccordées ensemble et être séparées l'une de l'autre, la partie interne (1) pouvant être emboîtée dans une ouverture (21) de la partie externe (2) au moyen d'un tenon d'emboîtement (5) et verrouillée dans cette position par un élément de retenue (3) déformable en direction radiale qui est logé dans un évidement (22) dans l'ouverture de la partie externe (2) et qui peut être déplacé par déformation élastique radiale dans cet évidement (22) lors de l'emboîtement, un évidement (18) étant prévu dans le tenon d'emboîtement (5) dans lequel l'élément de retenue (3) s'engrène par déformation élastique dans l'élément de raccordement en position de verrouillage de telle sorte que l'élément de retenue (3) verrouille le tenon d'emboîtement (5) et l'empêche de sortir de l'ouverture (21), la paroi latérale arrière, par rapport à la direction d'emboîtement, de l'évidement (18) dans le tenon d'emboîtement (5) étant formé par une face d'attaque (17) d'un élément de déverrouillage (15) placé sur le tenon d'emboîtement (5) et pouvant coulisser de façon axiale, **caractérisé en ce que** la paroi latérale avant, par rapport à la direction d'emboîtement, de l'évidement (18) dans le tenon d'emboîtement (5) est formée d'un élément d'appui (12) annulaire qui s'engrène dans un évidement périphérique (11) du tenon d'emboîtement (5) et qui prend appui, dans la direction axiale, dans l'évidement périphérique (11) et en ce que le diamètre de la pièce (8) du tenon d'emboîtement (5), située devant l'évidement périphérique (11) dans la direction d'emboîtement, est plus petit ou égal au plus petit diamètre intérieur de l'élément de déverrouillage (15).

2. Raccord par emboîtement selon la revendication 1, **caractérisé en ce que** l'élément d'appui (12) et / ou l'élément de retenue (3) est un anneau fendu fait dans un matériau élastique, par exemple de l'acier à ressort, du bronze à ressort ou une matière plastique.

3. Raccord par emboîtement selon la revendication 2, **caractérisé en ce que** l'anneau fendu à une section circulaire.

4. Raccord par emboîtement selon l'une des revendications précédentes, **caractérisé en ce que** la surface d'applique (25) prévue sur la partie externe (2) pour l'élément de retenue (3) est une surface conique, l'angle d'inclinaison de la surface conique étant plus petit que l'angle entre la tangente à l'élément de retenue (3) au point de contact avec l'élément d'appui (12) et l'axe moyen du raccord par emboîtement.

5. Raccord par emboîtement selon l'une des revendications précédentes, **caractérisé en ce que** la surface d'applique (13) sur le tenon d'emboîtement (5) pour l'élément de retenue (3) a un diamètre légèrement plus petit que la surface interne de l'élément de déverrouillage (15) qui recouvre la surface d'applique (13) lors du déverrouillage.

6. Raccord par emboîtement selon l'une des revendications précédentes, **caractérisé en ce qu'**un élément élastique (20), précontraint en position verrouillée en direction axiale, s'appuie d'une part sur la partie interne (1) et d'autre part sur la partie externe (2).

7. Raccord par emboîtement selon l'une des revendications précédentes, **caractérisé en ce que** l'élément de déverrouillage (15) se compose d'un manchon cylindrique qui peut être déplacé de façon axiale sur le tenon d'emboîtement (5) et qui présente un épaulement radial (16) servant à transmettre la force pour déplacer le manchon dans la position déverrouillée.

8. Raccord par emboîtement selon la revendication 7, **caractérisé en ce que** l'élément élastique (20) prend appui sur l'épaulement (16) de l'élément de déverrouillage (15).

9. Raccord par emboîtement selon l'une des revendications précédentes, **caractérisé en ce qu'**une saillie s'engrenant dans un évidement empêche le tenon d'emboîtement (5) placé dans l'ouverture de réception (21) de la partie externe (2) de tourner par rapport à la partie externe (2).

10. Raccord par emboîtement selon la revendication 9, **caractérisé en ce que** l'extrémité avant (8) du tenon d'emboîtement (5), par rapport à la direction d'emboîtement, présente, devant un anneau d'étanchéité (7), un crantage externe (35) qui s'engrène dans un crantage interne (36) formé dans l'ouverture de réception (21) de la partie externe (2).

11. Raccord par emboîtement selon la revendication 9, **caractérisé en ce que** l'élément de déverrouillage (15) a des saillies et / ou des renfoncements radiaux qui coopèrent avec des saillies ou des renfoncements radiaux qui s'écartent de la forme cylindrique et qui sont pratiqués dans l'ouverture (21) de la partie externe (2) et sur le manteau de la partie interne (1), de sorte que la partie interne (1) est empêchée de tourner par rapport à la partie externe (2).

12. Raccord par emboîtement selon la revendication 11, **caractérisé en ce que** l'élément de déverrouillage (15) se compose d'un manchon en tôle, l'extrémité du manchon qui s'engrène dans l'ouverture (21) de la partie externe (2) ainsi que le segment correspondant de l'ouverture (21) étant munis chacun d'un profilé cranté s'engrenant l'un dans l'autre, et en ce que l'autre extrémité du manchon est munie d'une surface interne (32) présentant de nombreuses arêtes qui entoure un segment (33) de la partie interne (1) présentant de nombreuses arêtes et en bloque la rotation.

13. Raccord par emboîtement selon l'une des revendications précédentes, **caractérisé en ce que** l'élément de déverrouillage (15), en position verrouillée, est étanche par rapport à la partie interne (1) et la partie externe (2).

14. Raccord par emboîtement selon l'une des revendications précédentes, **caractérisé en ce qu'**il est prévu un élément de sécurité pouvant être enlevé, empêchant un déplacement de l'élément de déverrouillage (15) en position déverrouillée.

15. Raccord par emboîtement selon l'une des revendications précédentes, **caractérisé en ce que** l'élément de déverrouillage est couplé au tenon d'emboîtement par un filetage.

16. Raccord par emboîtement selon l'une des revendications précédentes, **caractérisé en ce que** l'épaulement (16) de l'élément de déverrouillage (15) et / ou le collier circulaire (14) du tenon d'emboîtement (5) a, dans la surface d'applique (28) dirigée vers le collier circulaire (14) ou l'épaulement (16), un évidement (29) radial, ouvert vers l'extérieur, pour un outil de déverrouillage (38).

17. Raccord par emboîtement selon la revendication 16, **caractérisé en ce que** l'évidement (29) du collier circulaire (14) ou de l'épaulement (16) est formé par une surface conique.
